# EUROPÄISCHE PATENTANMELDUNG

(11) **EP 3 730 921 A1**
(43) Veröffentlichungstag der Anmeldung: **28.10.2020**
(21) Anmeldenummer: 19171231.4
(22) Anmeldetag: 25.04.2019
(51) Int. Cl.: G01M 17/013, E04H 1/12, E04H 15/00, F24F 3/16

(54) **BIEGEUMLAUFPRÜFMASCHINE ZUR PRÜFUNG VON FAHRZEUGRÄDERN**

(71) Anmelder: AMT Makra GmbH, 76694 Forst (DE)
(72) Erfinder: Mühlbauer, Christian, 69242 Mühlhausen (DE)
(74) Vertreter: Pistorius, Richard

(57) **Zusammenfassung**

Bei einer Biegeumlaufprüfmaschine zur Prüfung von Fahrzeugrädern, mit einem Auflagetisch 152 und einer Spannvorrichtung 210 zum Spannen eines zu prüfenden Fahrzeugrades 230 auf dem Auflagetisch 152, sowie mit einer Steuereinheit zum Steuern einer bei einer Prüfung jeweils anzuwendenden Prüfkraft, ist eine Absaugvorrichtung 100 mit einer Absaughülle 120 und ein zugeordnetes Filtersystem vorgesehen, wobei die Absaugvorrichtung 100 eine Lufthüllkurve 530 um ein auf dem Auflagetisch 152 gespanntes Fahrzeugrad 230 zum Abtransport von bei der Biegeumlaufprüfung entstehenden Feinstäuben erzeugt, und wobei die Feinstäube durch die Lufthüllkurve 530 über die Absaughülle 120 an das zugeordnete Filtersystem 135 geleitet werden.

## Beschreibung

Die vorliegende Erfindung betrifft eine Biegeumlaufprüfmaschine zur Prüfung von Fahrzeugrädern, mit einem Auflagetisch und einer Spannvorrichtung zum Spannen eines zu prüfenden Fahrzeugrades auf dem Auflagetisch, sowie mit einer Steuereinheit zum Steuern einer bei einer Prüfung jeweils anzuwendenden Prüfkraft.

Aus dem Stand der Technik ist eine derartige Biegeumlaufprüfmaschine zur Prüfung von Fahrzeugrädern bekannt. Diese Biegeumlaufprüfmaschine weist einen Auflagetisch und eine Spannvorrichtung zum Spannen eines zu prüfenden Fahrzeugrades auf dem Auflagetisch auf und dient zum Ausführen einer Biegeumlaufprüfung, die insbesondere als eine Prüfungsart für die Baumusterfreigabe und die fortlaufende Kontrolle von Fahrzeugrädern vorgesehen ist. Entsprechende Prüfparameter werden hierbei durch die jeweiligen gesetzlichen Vorschriften und durch die geforderten Radlasten eines jeweils zu testenden Rads bestimmt.

Da Fahrzeugräder zu den sicherheitsrelevantesten Teilen bei Automobilen zählen, müssen diese bei bzw. nach der Herstellung einer standardisierten Biegeumlaufprüfung unterzogen werden. Eine derartige Biegeumlaufprüfung dient hierbei unter anderem der fortlaufenden Qualitätskontrolle von Material und Verarbeitung.

Eine Biegeumlaufprüfmaschine für PKW-Räder ist z. B. von der Firma AMT Makra GmbH unter der Bezeichnung BUP 760 bekannt. Des Weiteren sind von der Firma AMT Makra GmbH auch Biegeumlaufprüfmaschinen für LKW-Räder bekannt, z. B. unter der Bezeichnung BUP 1000. Entsprechende zu prüfende Räder sind dabei Aluminiumräder, Magnesiumräder und/oder Stahlräder. Nachteilig ist bei diesen gebräuchlichen Biegeumlaufprüfmaschinen, dass diese nicht zur Prüfung von Fahrzeugrädern verwendet werden können, die bei Belastung, Beschädigung und/oder Zerstörung Stäube und/oder Gase emittieren können. Dies beruht darauf, dass Emissionen derartiger Stäube und/oder Gase in die Umgebungsluft der Biegeumlaufprüfmaschinen bei der Biegeumlaufprüfung nach der Technischen Anleitung zur Reinhaltung der Luft, kurz TA Luft, bzw. nach den gültigen Arbeitsstättenrichtlinien, nicht zulässig sind.

Es ist deshalb eine Aufgabe der vorliegenden Erfindung, eine neue Biegeumlaufprüfmaschine zur Prüfung von Fahrzeugrädern bereitzustellen, die auch bei Fahrzeugrädern Anwendung finden kann, die bei Belastung, Beschädigung und/oder Zerstörung Stäube und/oder Gase emittieren.

Diese Aufgabe wird gelöst durch eine Biegeumlaufprüfmaschine zur Prüfung von Fahrzeugrädern, mit einem Auflagetisch und einer Spannvorrichtung zum Spannen eines zu prüfenden Fahrzeugrades auf dem Auflagetisch, sowie mit einer Steuereinheit zum Steuern einer bei einer Prüfung jeweils anzuwendenden Prüfkraft. Eine Absaugvorrichtung mit einer Absaughülle und ein zugeordnetes Filtersystem ist vorgesehen, wobei die Absaugvorrichtung eine Lufthüllkurve um ein auf dem Auflagetisch gespanntes Fahrzeugrad zum Abtransport von bei der Biegeumlaufprüfung entstehenden Feinstäuben erzeugt, und wobei die Feinstäube durch die Lufthüllkurve über die Absaughülle an das zugeordnete Filtersystem geleitet werden.

Die Erfindung ermöglicht somit die Bereitstellung einer Biegeumlaufprüfmaschine, bei der durch die Absaugvorrichtung eine Verwendung bei Fahrzeugrädern ermöglicht werden kann, die bei Belastung, Beschädigung und/oder Zerstörung Stäube und/oder Gase emittieren können. Somit können auf einfache Art und Weise die geltenden Gesetze bezüglich emittierter Stäube und/oder Gase eingehalten werden, wodurch eine Gefährdung von Betriebspersonal aufgrund von gesundheitsschädlichen Feinstäuben vermieden werden kann. Vorzugsweise ist die Absaughülle nach Art einer flexiblen Folie oder einer steifen Haube ausgebildet. Somit kann leicht und unkompliziert eine geeignete Absaughülle bereitgestellt werden.

Die als flexible Folie ausgebildete Absaughülle ist bevorzugt mit Magneten versehen, die eine Fixierung der Absaughülle an der Biegeumlaufprüfmaschine ermöglichen. Somit kann eine sichere und zuverlässige Anordnung der Absaughülle, insbesondere eines freien Endes der Absaughülle, an der Biegeumlaufprüfmaschine ermöglicht werden.

Bevorzugt ist die als flexible Folie ausgebildete Absaughülle als Reifrockkonstruktion ausgebildet. Somit kann eine betriebssichere Anordnung der flexiblen Folie um das zu prüfende Fahrzeugrad ermöglicht werden.

Gemäß einer Ausführungsform ist die Biegeumlaufprüfmaschine zur Biegeumlaufprüfung von Karbon aufweisenden Fahrzeugrädern ausgebildet, wobei die Feinstäube Karbon-Feinstäube und/oder Karbon-Partikel aufweisen, die durch eine Beschädigung und/oder Zerstörung eines auf dem Auflagetisch gespannten, Karbon aufweisenden Fahrzeugrades bei einer Biegeumlaufprüfung freigesetzt werden. Somit kann einfach und unkompliziert eine Anwendung der Biegeumlaufprüfmaschine mit der Absaugvorrichtung zur Biegeumlaufprüfung von Karbon aufweisenden Fahrzeugrädern ermöglicht werden.

Vorzugsweise ist eine Absaugeinheit zur Ausbildung der Lufthüllkurve vorgesehen. Somit kann auf einfache Art und Weise die Lufthüllkurve erzeugt werden.

Gemäß einer Ausführungsform ist die Absaugeinheit an der Biegeumlaufprüfmaschine angeordnet oder in diese integriert. Somit kann eine anwendungsspezifische Anordnung der Absaugeinheit ermöglicht werden.

Vorzugsweise ist die Absaugeinheit nach Art eines Saugers und/oder einer Zentralabsaugung ausgebildet. Somit kann leicht und unkompliziert eine geeignete Absaugeinheit bereitgestellt werden.

Bevorzugt ist das Filtersystem zum Filtern von gesundheitsschädlichen Feinstäuben ausgebildet, wobei das Filtersystem einen Hepafilter und/oder einen Wasserbadfilter aufweist. Somit kann ein sicheres und zuverlässiges Reinigen von jeweils abgesaugter Luft ermöglicht werden.

Vorzugsweise ist ein Absaugelement mit Absaugöffnungen zum Abtransport der Feinstäube vorgesehen ist, wobei das Absaugelement im Bereich einer Radnabe eines auf dem Auflagetisch gespannten Fahrzeugrades ohne Kontakt zum Fahrzeugrad angeordnet ist. Somit kann auf einfache Art und Weise eine geeignete Absaugung bzw. ein Abtransport der Feinstäube ermöglicht werden.

Darüber hinaus wird die oben genannte Aufgabe durch eine Absaugvorrichtung für eine Biegeumlaufprüfmaschine zur Prüfung von Fahrzeugrädern gelöst, wobei die Biegeumlaufprüfmaschine einen Auflagetisch und eine Spannvorrichtung zum Spannen eines zu prüfenden Fahrzeugrades auf dem Auflagetisch, sowie eine Steuereinheit zum Steuern einer bei einer Prüfung jeweils anzuwendenden Prüfkraft aufweist. Eine Absaughülle und ein zugeordnetes Filtersystem sind vorgesehen, wobei die Absaugvorrichtung eine Lufthüllkurve um ein auf dem Auflagetisch gespanntes Fahrzeugrad zum Abtransport von bei der Biegeumlaufprüfung entstehenden Feinstäuben erzeugt, und wobei die Feinstäube durch die Lufthüllkurve über die Absaughülle an das zugeordnete Filtersystem geleitet werden.

Die Erfindung ermöglicht somit die Bereitstellung einer Absaugvorrichtung für eine Biegeumlaufprüfmaschine, durch die eine Verwendung der Biegeumlaufprüfmaschine bei Fahrzeugrädern, die bei Belastung, Beschädigung und/oder Zerstörung Stäube und/oder Gase emittieren können, ermöglicht werden kann. Somit können auf einfache Art und Weise die geltenden Gesetze bezüglich emittierter Stäube und/oder Gase eingehalten werden, wodurch eine Gefährdung von Betriebspersonal aufgrund von gesundheitsschädlichen Feinstäuben vermieden werden kann.

Die Erfindung ist anhand von in den Zeichnungen dargestellten Ausführungsbeispielen in der nachfolgenden Beschreibung näher erläutert. Es zeigen:
- Fig. 1: eine Vorderansicht einer erfindungsgemäßen Biegeumlaufprüfmaschine mit einer Absaugvorrichtung,
- Fig. 2: eine Vorderansicht der Biegeumlaufprüfmaschine von Fig. 1 mit einem der Absaugvorrichtung zugeordneten Absaugelement,
- Fig. 3: eine vergrößerte Ansicht eines einem Absaugstutzen zugewandten Endes des Absaugelements von Fig. 2 und Fig. 3,
- Fig. 4: eine vergrößerte Ansicht eines einem zu prüfenden Fahrzeugrad zugewandten Endes des Absaugelements von Fig. 2,
- Fig. 5: eine perspektivische Ansicht eines auf der Biegeumlaufprüfmaschine von Fig. 1 und Fig. 2 angeordneten und zu prüfenden Fahrzeugrades,
- Fig. 6: eine Draufsicht auf ein der Biegeumlaufprüfmaschine zugewandtes Ende der der Absaugvorrichtung zugeordneten Absaughülle,
- Fig. 7: eine Innenansicht der Absaughülle von Fig. 6,
- Fig. 8: eine perspektivische Ansicht der Biegeumlaufprüfmaschine von Fig. 1 mit einer weiteren Absaugvorrichtung,
- Fig. 9: eine perspektivische Ansicht der Biegeumlaufprüfmaschine von Fig. 1 mit einer alternativen Absaugvorrichtung, und
- Fig. 10: eine perspektivische Ansicht der Biegeumlaufprüfmaschine von Fig. 1 mit einer weiteren Absaugvorrichtung.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

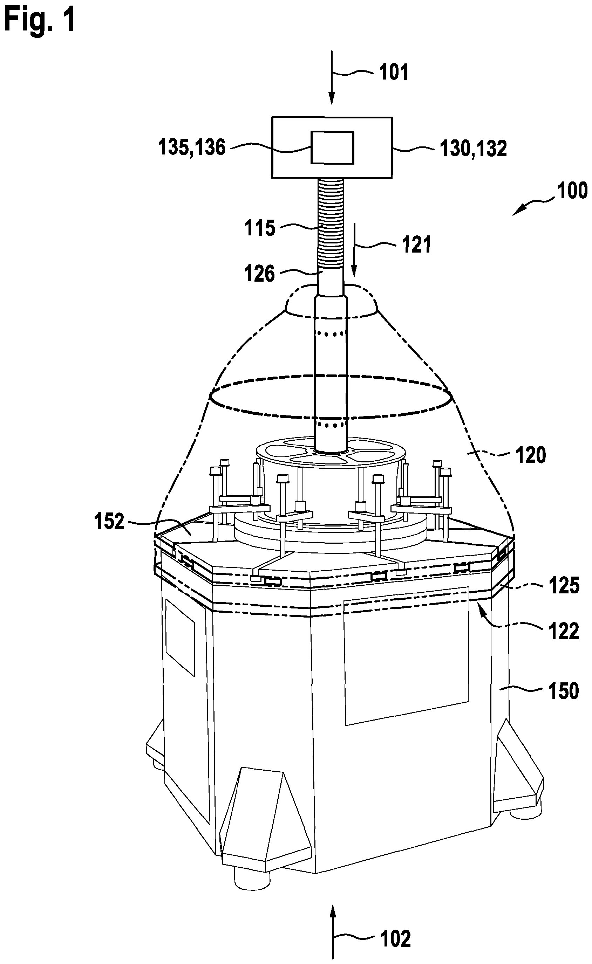

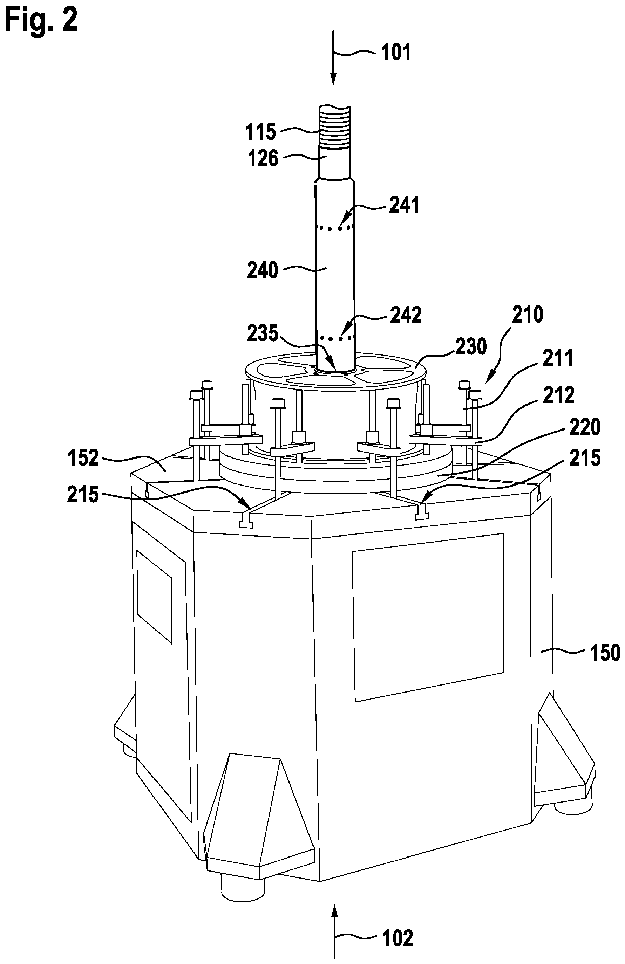

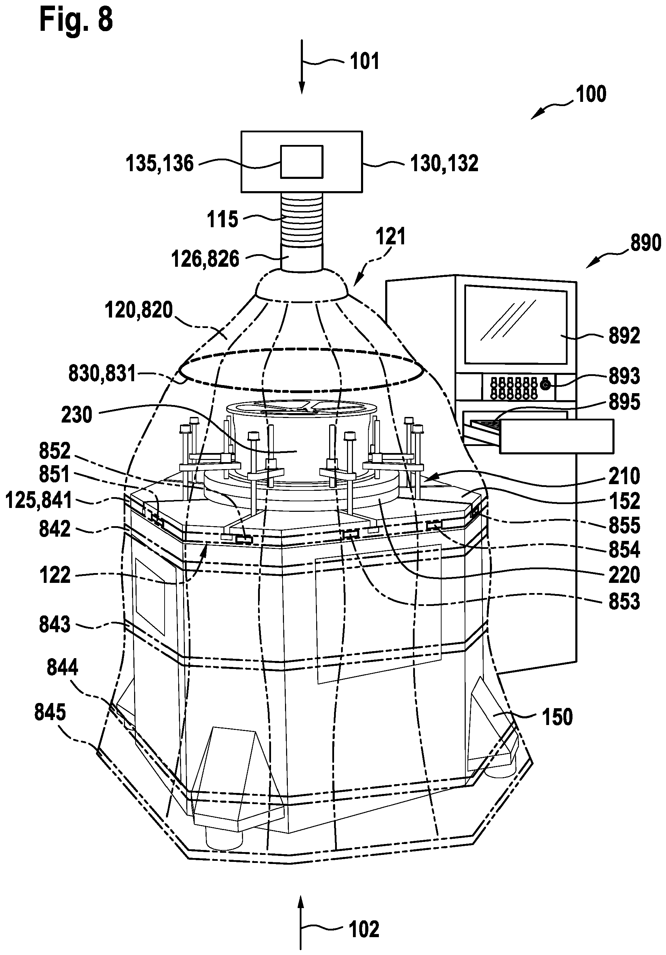

Fig. 1 zeigt eine beispielhafte Biegeumlaufprüfmaschine 150 zur Prüfung von Fahrzeugrädern. Die Biegeumlaufprüfmaschine 150 weist ein erstes, illustrativ oberes Ende 101 und ein zweites, illustrativ unteres Ende 102 auf. Vorzugsweise weist die Biegeumlaufprüfmaschine 150 einen Auflagetisch 152 zum Auflegen eines zu prüfenden Fahrzeugrades (230 in Fig. 2) auf. Des Weiteren weist die Biegeumlaufprüfmaschine 150 eine Steuereinheit (890 in Fig. 8) zum Steuern einer bei einer Prüfung jeweils anzuwendenden Prüfkraft auf.

Erfindungsgemäß weist die Biegeumlaufprüfmaschine 150 eine Absaugvorrichtung 100 auf. Die Absaugvorrichtung 100 ist vorzugsweise mit einer Absaughülle 120 ausgestattet. Des Weiteren ist der Absaugvorrichtung 100 bevorzugt ein Filtersystem 135 zugeordnet.

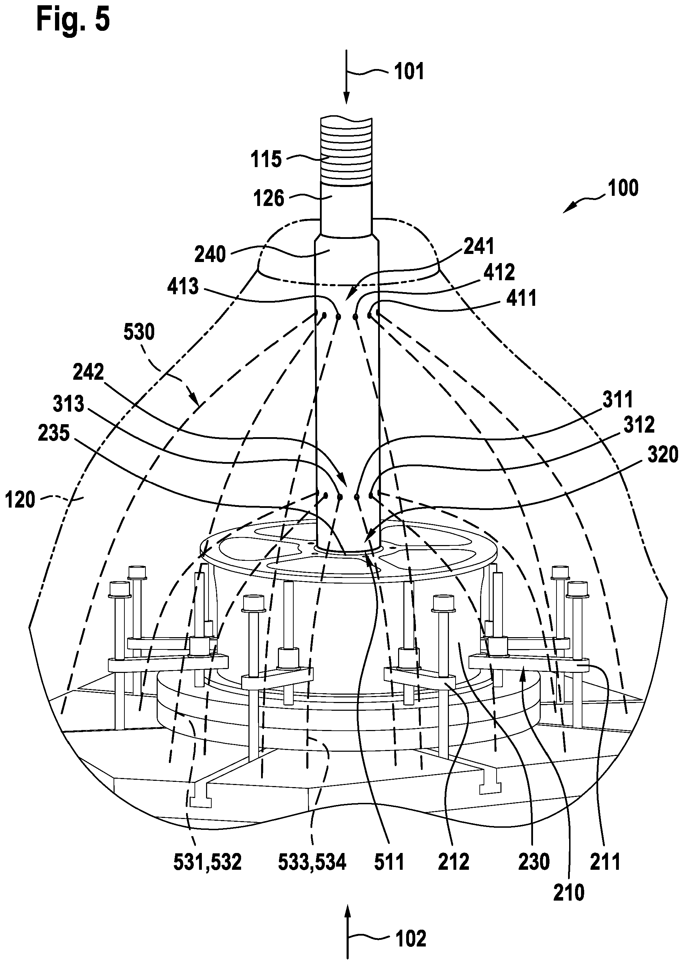

Im Betrieb erzeugt die Absaugvorrichtung 100 bevorzugt eine Lufthüllkurve (530 in Fig. 5) um ein auf dem Auflagetisch 152 zur Biegeumlaufprüfung gespanntes Fahrzeugrad (230 in Fig. 2), wobei die Lufthüllkurve zum Abtransport von bei der Biegeumlaufprüfung entstehenden Feinstäuben ausgebildet ist. Hierbei werden vorzugsweise die Feinstäube durch die Lufthüllkurve über die Absaughülle 120 an das zugeordnete Filtersystem 135 abtransportiert.

Die Absaughülle 120 weist ein erstes, illustrativ oberes Ende 121 sowie ein zweites, illustrativ unteres Ende 122 auf. Bevorzugt ist das untere Ende 122 als freies Ende ausgebildet. Dabei ist dem freien Ende 122 ein Befestigungsabschnitt 125 zugeordnet, der dazu ausgebildet ist, die Absaughülle 120 im Bereich der Biegeumlaufprüfmaschine 150 zu befestigen. Bevorzugt ist der Befestigungsabschnitt 125 im Bereich des Auflagetisches 152 angeordnet. Darüber hinaus weist die Absaughülle 120 an ihrem ersten Ende 121 illustrativ einen Absaugstutzen 126 auf.

Bevorzugt ist das Filtersystem 135 einer Absaugeinheit 130 zugeordnet. Die Absaugeinheit 130 ist bevorzugt zur Ausbildung der Lufthüllkurve (530 in Fig. 5) vorgesehen. Dabei ist die Absaugeinheit 130 vorzugsweise an der Biegeumlaufprüfmaschine 150 angeordnet oder in diese integriert.

Die Absaugeinheit 130 ist bevorzugt in Fig. 1 als Zentralabsaugung 132 ausgebildet, wobei das Filtersystem 135 vorzugsweise und beispielhaft als Hepafilter 136 ausgebildet ist. Dabei ist das Filtersystem 135 insbesondere zumindest zum Filtern von gesundheitsschädlichen Feinstäuben ausgebildet. Hierfür ist das Filtersystem 130 mit dem Absaugstutzen 126 über ein vorzugsweise rohrartiges Absaugelement 115 verbunden. Bevorzugt ist das Absaugelement 115 als Absaugschlauch ausgebildet. Unter den Begriff "Feinstäube" fallen im Kontext der vorliegenden Beschreibung auch Dampf und/oder Klein- und Kleinstpartikel.

Fig. 2 zeigt die Biegeumlaufprüfmaschine 150 von Fig. 1 mit einem auf dem Auflagetisch 152 der Biegeumlaufprüfmaschine 150 angeordneten, zu prüfenden Fahrzeugrad 230. Bevorzugt ist das Fahrzeugrad 230 als PKW-, Kraftrad- und/oder LKW-Rad ausgebildet. Jedoch kann das Fahrzeugrad 230 auch einem beliebig anderen motorisierten Fahrzeug zugeordnet sein.

Das Fahrzeugrad 230 weist vorzugsweise ein Material auf, das bei Belastung, Beschädigung und/oder Zerstörung Stäube, insbesondere Feinstäube, und/oder Gase emittieren kann. Gemäß einer Ausführungsform weist das zu prüfende Fahrzeugrad 230 Karbon auf. Die Absaugvorrichtung 100 ist dabei insbesondere dazu ausgebildet, die bei der Biegeumlaufprüfung von Karbon-Rädern entstehenden Stäube, vorzugsweise Feinstäube, die bei Beschädigungen und/oder Zerstörungen der Karbon-Räder entstehen können, abzutransportieren.

Das zu prüfende Fahrzeugrad 230 ist vorzugsweise mittels einer Spannvorrichtung 210 auf dem Auflagetisch 152 gespannt. Dabei ist der Spannvorrichtung 210 zumindest ein, illustrativ mehrere Spannelemente 211, 212, zugeordnet. Die Spannelemente 211, 212 sind bevorzugt in T-Nuten 215, die auf dem Auflagetisch 152 ausgebildet sind, geführt. Dadurch kann ein leichtes Auf- und/oder Abspannen des zu prüfenden Fahrzeugrades 230 auf dem Auflagetisch 152 bzw. in der Spannvorrichtung 210 ermöglicht werden. Um eine für die Biegeumlaufprüfung erforderliche Einbauhöhe des Fahrzeugrades 230 zu erreichen, ist bzw. sind zwischen dem Auflagetisch 152 und dem Fahrzeugrad 230 zumindest ein, illustrativ zwei Unterlegringe 220 angeordnet.

Des Weiteren ist dem Fahrzeugrad 230 illustrativ eine Radnabe 235 zugeordnet, die an einer Radaufnahme der Biegeumlaufprüfmaschine 150 angeordnet ist. Ein für die Biegeumlaufprüfung erforderliches Biegemoment wird bevorzugt über ein einstellbares Fliehgewicht auf das Fahrzeugrad 230 aufgebracht. Dieses Fliehgewicht ist vorzugsweise durch eine Positionsänderung und/oder eine Gewichtsänderung einstellbar. Die Einstellung kann dabei über die Steuereinheit (890 in Fig. 8) erfolgen.

Eine geeignete Biegeumlaufprüfmaschine mit einer Spannvorrichtung und zumindest einem Unterlegring, mit der die Biegeumlaufprüfmaschine 150 mit der Spannvorrichtung 210 und dem zumindest einen Unterlegring 220 realisiert werden kann, ist aus dem Stand der Technik hinreichend bekannt. Deshalb wird hier zwecks Knappheit und Einfachheit der Beschreibung auf eine eingehende Beschreibung der Biegeumlaufprüfmaschine 150 verzichtet.

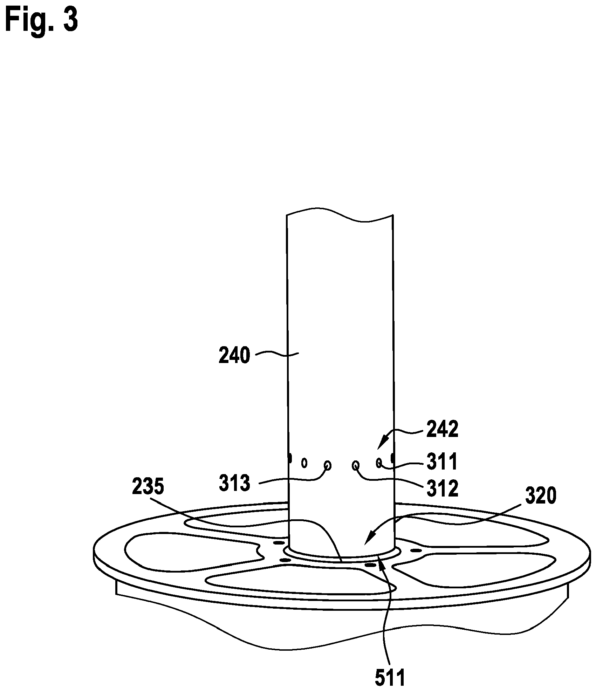

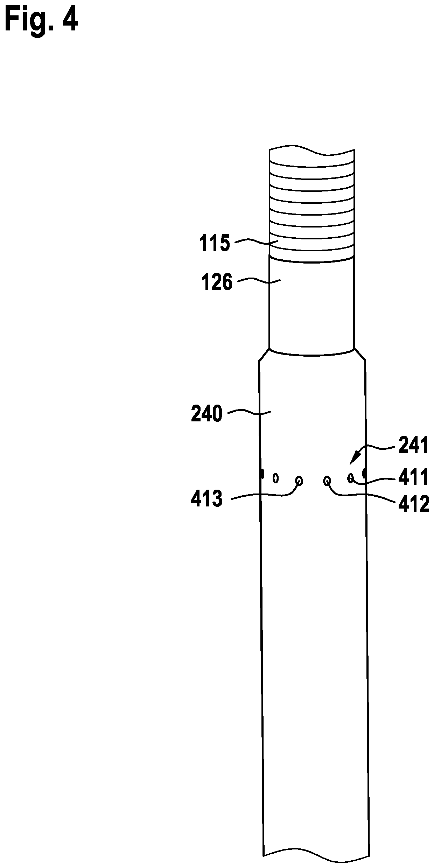

Gemäß einer Ausführungsform weist die Absaugvorrichtung 100 ein Absaugelement 240 auf. Das Absaugelement 240 ist bevorzugt zumindest mit einer Mehrzahl 241, 242 von Absaugöffnungen (311 bis 313 in Fig. 3; 411 bis 413 in Fig. 4) zum Abtransport von Feinstäuben versehen.

Hierbei ist das Absaugelement 240 bevorzugt im Bereich einer Radnabe 235 des auf dem Auflagetisch 152 gespannten Fahrzeugrades 230 angeordnet. Dabei ist jedoch das Absaugelement 240 von der Radnabe 235 beabstandet bzw. ohne Kontakt zum Fahrzeugrad 230 angeordnet. Somit kann ein Verfälschen entsprechender Prüfergebnisse sicher und zuverlässig verhindert werden. Vorzugsweise ist das Absaugelement 240 rohrartig ausgebildet. Dabei ist das Absaugelement 240 an seinem dem ersten Ende 101 der Biegeumlaufprüfmaschine 150 zugewandten Ende mit dem Absaugstutzen 126 verbunden.

Gemäß einer Ausführungsform weist das Absaugelement 240 eine erste Mehrzahl 241 von Absaugöffnungen (411-413 in Fig. 4) und eine zweite Mehrzahl 242 von Absaugöffnungen (311-313 in Fig. 3) auf. Illustrativ und vorzugsweise ist die erste Mehrzahl 241 von Absaugöffnungen im Bereich des Fahrzeugrades 230 angeordnet, und die zweite Mehrzahl 242 von Absaugöffnungen ist im Bereich des Absaugstutzens 126 ausgebildet.

Es wird darauf hingewiesen, dass die Ausgestaltung des Absaugelements 240 mit zwei Mehrzahlen von Absaugöffnungen lediglich beispielhaften Charakter hat und nicht als Einschränkung der Erfindung zu verstehen ist. Vielmehr kann das Absaugelement 240 auch eine beliebige Anzahl von Mehrzahlen von Absaugöffnungen aufweisen. Illustrativ sind die Absaugöffnungen in Umfangsrichtung ausgebildet, jedoch können diese auch z. B. spiralförmig entlang der Längserstreckung des Absaugelements 240 angeordnet sein.

Fig. 3 zeigt einen vergrößerten Ausschnitt des Fahrzeugrades 230 und des dem Fahrzeugrad 230 zugewandten Endes des Absaugelements 240 von Fig. 2. Dabei verdeutlicht Fig. 3 die Ausbildung des Absaugelements 240 mit seinem vorzugsweise rohrförmigen Grundkörper.

Bevorzugt weist das Absaugelement 240 einen einem Außendurchmesser der Radnabe 235 zumindest im Wesentlichen entsprechenden Durchmesser auf. Hierbei ist das Absaugelement 240 bzw. sein der Radnabe 235 zugewandtes Ende 511 im Bereich der Radnabe 235 angeordnet und es besteht eine kontaktlose Anordnung 320 zwischen dem Absaugelement 240 und der Radnabe 235. Vorzugsweise weist das Absaugelement 240 im Bereich der Radnabe 235 die zweite Mehrzahl 242 von Absaugöffnungen auf. Dabei sind die Absaugöffnungen der zweiten Mehrzahl 242 in Umfangsrichtung des Absaugelements 240 angeordnet. Illustrativ sind lediglich drei Absaugöffnungen 311, 312, 313 mit Bezugsziffern gekennzeichnet. Bevorzugt sind die Absaugöffnungen 311, 312, 313 in gleichmäßigen Abständen entlang des Umfangs des Absaugelements 240 angeordnet.

Fig. 4 zeigt ein dem Absaugstutzen 126 von Fig. 1 zugewandtes Ende des Absaugelements 240 von Fig. 2. Dabei verdeutlicht Fig. 4 die erste Mehrzahl 241 von Absaugöffnungen. Analog zu den Absaugöffnungen 311, 312, 313 der zweiten Mehrzahl 242 von Absaugöffnungen von Fig. 3, sind entsprechende Absaugöffnungen 411, 412, 413 der ersten Mehrzahl 241 von Absaugöffnungen entlang des Umfangs des Absaugelements 240 angeordnet.

Es wird darauf hingewiesen, dass die Anzahl der Absaugöffnungen der zweiten Mehrzahl 242 und der ersten Mehrzahl 241 von Absaugöffnungen unterschiedlich sein kann. Illustrativ und vorzugsweise ist die erste Mehrzahl 241 von Absaugöffnungen im Bereich des Absaugstutzens 126 angeordnet. Dabei kann der Absaugstutzen 126 auch einstückig mit dem Absaugelement 240 ausgebildet sein.

Fig. 5 zeigt den Auflagetisch 152 von Fig. 1 der Biegeumlaufprüfmaschine 150 mit dem durch die Spannvorrichtung 210 gespannten, zu prüfenden Fahrzeugrad 230, sowie der Absaugvorrichtung 100 mit dem Absaugelement 240. Dabei verdeutlicht Fig. 5 eine durch die Absaugvorrichtung 100 erzeugte Lufthüllkurve 530.

Die Lufthüllkurve 530 weist bevorzugt zumindest eine Mehrzahl von Luftlinien auf. In Fig. 5 sind beispielhaft zwei Mehrzahlen von Luftlinien dargestellt. Eine erste Mehrzahl 531 von Luftlinien 532 verdeutlicht dabei einen Luftstrom zu den Absaugöffnungen 311, 312, 313 der zweiten Mehrzahl 242 von Absaugöffnungen. Des Weiteren verdeutlicht die zweite Mehrzahl 533 von Luftlinien 534 einen Luftstrom zu den Absaugöffnungen 411, 412, 413 der ersten Mehrzahl 241 von Absaugöffnungen.

Es wird darauf hingewiesen, dass die angedeuteten Luftlinien 532, 534 lediglich beispielhaften Charakter haben und nicht als Einschränkung der Erfindung zu sehen sind. So können auch weitere Luftlinien vorhanden sein, die vorzugsweise entlang den Luftlinien 534 verlaufen, an den Absaugöffnungen 311, 312, 313 entlang verlaufen und durch die Absaugöffnungen 411, 412, 413 abgeleitet werden.

Darüber hinaus verdeutlicht Fig. 5 das dem Absaugelement 240 zugeordnete, der Radnabe 235 zugewandte Ende 511, das von der Radnabe 235 beabstandet angeordnet ist. Hierbei bilden die Radnabe 235 und das Ende 511 des Absaugelements 240 die kontaktlose Anordnung 320 aus.

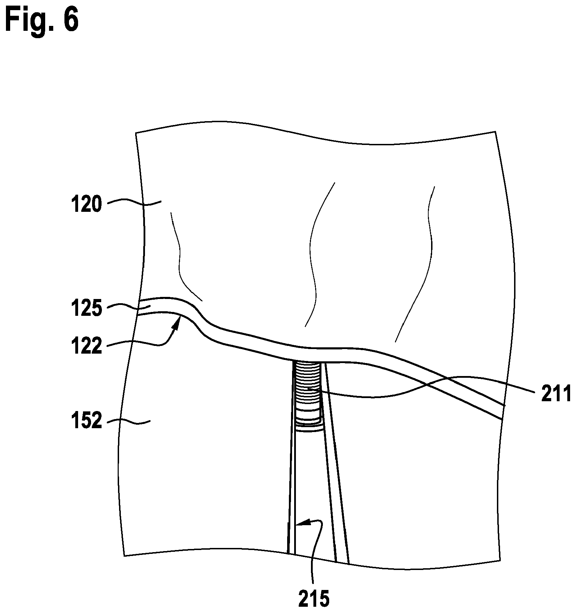

Fig. 6 zeigt einen vergrößerten Ausschnitt des zweiten Endes 122 der Absaughülle 120 von Fig. 1. Dabei verdeutlicht Fig. 6 die Absaughülle 120, die gemäß einer Ausführungsform eine Länge aufweist, bei der das zweite Ende 122 beabstandet vom Auflagetisch 152 angeordnet ist. Darüber hinaus verdeutlicht Fig. 6 das durch die T-Nuten 215 geführte Spannelement 211 der Spannvorrichtung 210 von Fig. 2.

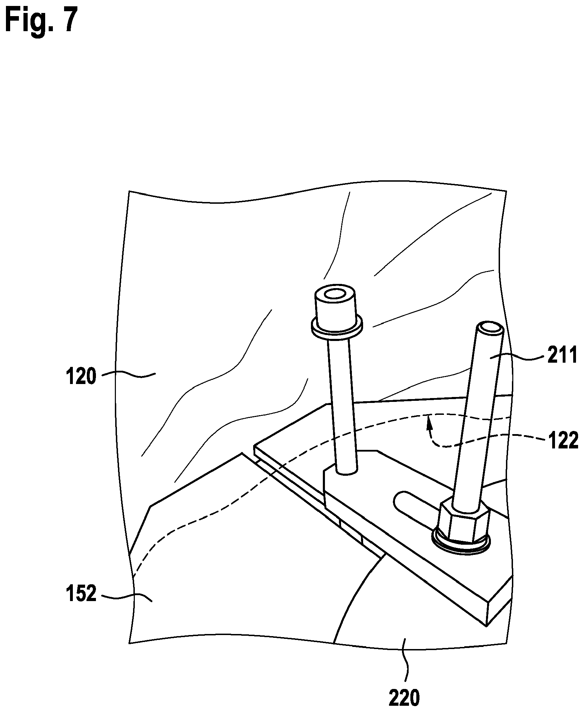

Fig. 7 zeigt eine weitere Ausführungsform der Absaughülle 120, bei der das zweite Ende 122 der Absaughülle 120 den Auflagetisch 152 überragt. Die Absaughülle 120 ist dabei vorzugsweise derart angeordnet, dass die Spannelemente 211 von der Absaughülle 120 beabstandet angeordnet sind.

Fig. 8 zeigt die Biegeumlaufprüfmaschine 150 von Fig. 1 mit einer Steuereinheit 890 zum Steuern einer bei einer Prüfung anzuwendenden Prüfkraft. Vorzugsweise weist die Steuereinheit 890 ein Display 892, zumindest ein Steuerelement 893 und/oder eine Eingabeeinheit 895 auf.

Die Steuereinheit 890 ist der Biegeumlaufprüfmaschine 150 zugeordnet und in Fig. 8 illustrativ als separate Vorrichtung ausgebildet. Jedoch kann die Steuereinheit 890 auch in die Biegeumlaufprüfmaschine 150 integriert sein oder an dieser angeordnet sein.

Die Biegeumlaufprüfmaschine 150 weist illustrativ die Absaugvorrichtung 100 mit der Absaugeinheit 130 von Fig. 1 auf. Gemäß einer Ausführungsform ist die Absaughülle 120 jedoch hier nach Art einer flexiblen Folie 820 ausgebildet. Dabei ist die als flexible Folie 820 ausgebildete Absaughülle 120 vorzugsweise als Reifrockkonstruktion 830 ausgebildet.

Der Reifrockkonstruktion 830 ist vorzugsweise zumindest ein Reifrockelement 831 zugeordnet. Das Reifrockelement 831 ist dabei bevorzugt aus einem Draht und/oder einem Kunststoff ausgebildet.

Die Reifrockkonstruktion 830 ist vorzugsweise dazu ausgebildet, die Absaughülle 820 derart an der Biegeumlaufprüfmaschine 150 anzuordnen, dass die Spannvorrichtung 210 und/oder das zu prüfende Fahrzeugrad 230 nicht von der Absaughülle 120 berührt werden. Somit kann ein Verfälschen der Prüfergebnisse sicher und zuverlässig verhindert werden.

Die Absaughülle 120 kann dabei unterschiedliche Längen aufweisen. So kann die Absaughülle 120 z. B. eine Länge aufweisen, bei der der Befestigungsabschnitt 125 (s. Fig. 1) bzw. ein Befestigungsabschnitt 841 im Bereich des Auflagetisches 152 enden. Bevorzugt kann die Absaughülle 120 eine alternative Länge aufweisen, bei der ein zugeordneter Befestigungsabschnitt 842 den Auflagetisch 152 überragt. Darüber hinaus kann die Absaughülle 120 eine weitere Länge aufweisen, bei der ein zugeordneter Befestigungsabschnitt 843 zumindest annähernd mittig an einem der Biegeumlaufprüfmaschine 150 zugeordneten Gehäuse endet. Ein einer alternativen Länge der Absaughülle 120 zugeordneter Befestigungsabschnitt 844 kann dabei an einem illustrativ unteren Ende des Gehäuses der Biegeumlaufprüfmaschine 150 angeordnet sein. Des Weiteren kann die Absaughülle 120 eine weitere Länge aufweisen, bei der ein zugeordneter Befestigungsabschnitt 845 auf einem Untergrund, auf dem die Biegeumlaufprüfmaschine 150 angeordnet ist, angeordnet ist.

Es wird darauf hingewiesen, dass in Fig. 8 mehrere Ausführungsformen der Absaughülle 120 in einer Zeichnungsfigur gezeigt sind, wobei die jeweilige Absaughülle 120 jeweils eine zugeordnete Länge aufweist und der Befestigungsabschnitt an einem freien Ende 122 der Absaughülle 120 angeordnet ist. Anders ausgedrückt, kann die Absaughülle 120 ausgehend von ihrem freien Ende 122 bis zu jedem gezeigten Befestigungsabschnitt hin verkürzt werden.

Dabei wird darauf hingewiesen, dass die in Fig. 8 gezeigten Längen der Absaughülle 120 lediglich beispielhaften Charakter haben und nicht als Einschränkung der Erfindung zu sehen sind. So kann die Absaughülle 120 auch eine beliebig andere Länge aufweisen, durch die eine geeignete Lufthüllkurve 530 (vgl. Fig. 5) ausgebildet werden kann.

Vorzugsweise ist die Absaughülle 120 an ihrem illustrativ unteren Ende bzw. am Befestigungsabschnitt 125 bzw. 841-845 mit mindestens einem, illustrativ fünf Magneten 851-855 versehen. Die Magnete 851-855 sind dabei vorzugsweise dazu vorgesehen, eine Fixierung der Absaughülle 120 an der Biegeumlaufprüfmaschine 150 zu ermöglichen. Bevorzugt sind die Magnete 851-855 am unteren Ende 122 der Absaughülle 120 in Umfangsrichtung verteilt angeordnet.

Gemäß einer Ausführungsform weist die als flexible Folie 820 ausgebildete Absaughülle 120 an ihrem illustrativ oberen Ende 121 den Absaugstutzen 126 bzw. 826 auf. Der Absaugstutzen 826 ist dabei bevorzugt einstückig mit der Absaughülle 120 ausgebildet.

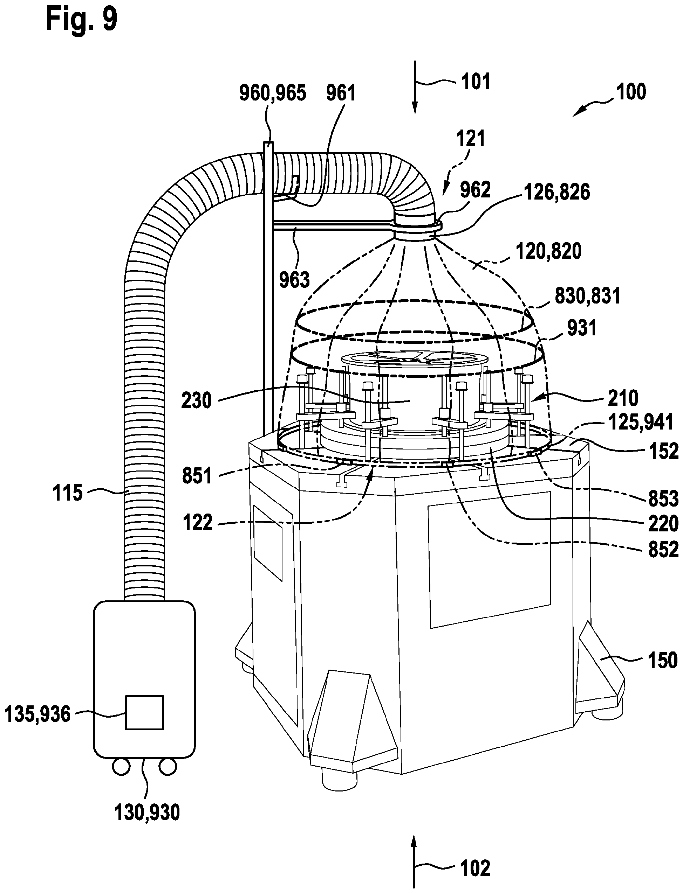

Fig. 9 zeigt die Biegeumlaufprüfmaschine 150 mit der Absaugvorrichtung 100 von Fig. 1, der die Absaughülle 120 von Fig. 8 zugeordnet ist. Bevorzugt weist die als flexible Folie 820 ausgebildete Absaughülle 120 eine Länge auf, die derart ausgebildet ist, dass das zweite bzw. freie Ende 122 der Absaughülle 120, bzw. ein zugeordneter Befestigungsabschnitt 941, auf dem Auflagetisch 152 aufliegt.

Analog zur Ausführungsform von Fig. 8 weist der Befestigungsabschnitt 941 die Magneten 851-855 auf. Darüber hinaus weist die Reifrockkonstruktion 830 der Absaughülle 820 ein weiteres Reifrockelement 931 auf. Es wird darauf hingewiesen, dass die Reifrockkonstruktion 830 eine beliebige Anzahl von Reifrockelementen aufweisen kann. Dabei können auch z. B. die Reifrockelemente 831 und 931 über in Längsrichtung der Absaughülle 120 ausgebildete Reifrockelemente miteinander verbunden sein.

Gemäß einer weiteren Ausführungsform ist die Absaugeinheit 130 in Fig. 9 nach Art eines Saugers 930, insbesondere eines Industriesaugers, ausgebildet. Der Sauger 930 ist vorzugsweise als Sauger, bevorzugt Industriesauger, der Klasse H ausgebildet (z. B. analog zu einem Kärcher NT 35/1), der dazu ausgebildet ist, gesundheitsschädliche Stäube aufzusaugen.

Darüber hinaus ist dem Sauger 930 bevorzugt ein Filtersystem 135 zugeordnet. Vorzugsweise ist das Filtersystem 135 in Fig. 9 als Wasserbadfilter 936 ausgebildet. Hierbei ist der Sauger 930 als Wassersauger ausgebildet, z. B. analog zu einem Hyla EST Sauger. Illustrativ ist der Sauger 930 als externer Sauger ausgebildet. Es wird jedoch darauf hingewiesen, dass der Sauger 930 auch in die Biegeumlaufprüfmaschine 150 integriert sein kann.

Des Weiteren bietet ein derartiger Sauger 930 eine vollautomatische Absaugung, die das Aufsaugen großer Feinstaubmengen ohne Arbeitsunterbrechungen mit konstant hoher Saugleistung ermöglicht. Vorzugsweise ist der Sauger 930 durch das Antistatik-System durchgeerdet bis zum Absaugstutzen 126, inklusive elektrisch leitendem Zubehör, zur Reduzierung elektrostatischer Aufladungen bei Trockenstäuben. Darüber hinaus können auch Elektrowerkzeuge an einer dem Sauger 930 zugeordneten Steckdose angeschlossen werden. Dabei kann die Steckdose eine Stand-by-Funktion aufweisen. Des Weiteren weist der Sauger 930 optional eine stufenlose Drehzahlregulierung und/oder eine integrierte Zubehöraufnahme auf.

Darüber hinaus verdeutlicht Fig. 9 eine Haltevorrichtung 960, die bevorzugt dazu ausgebildet ist, das vorzugsweise als Absaugschlauch ausgebildete Absaugelement 115 an der Biegeumlaufprüfmaschine 150, bzw. an dem Absaugstutzen 126, anzuordnen. Illustrativ ist die Haltevorrichtung 960 an der Biegeumlaufprüfmaschine 150 angeordnet. Es wird jedoch darauf hingewiesen, dass die Haltevorrichtung 960 auch eigenständig im Bereich der Biegeumlaufprüfmaschine 150 angeordnet sein kann.

Darüber hinaus weist die Haltevorrichtung 960 bevorzugt einen Haltearm 963 auf, der dazu ausgebildet ist, den Absaugstutzen 126 der Absaughülle 120 über der Biegeumlaufprüfmaschine 150 anzuordnen. Hierzu weist der Haltearm 963 vorzugsweise ein Halteelement 962 auf.

Des Weiteren weist die Haltevorrichtung 960 bevorzugt ein Halteelement 961 zum Halten des Absaugschlauchs 115 auf. Vorzugsweise ist das Halteelement 961 U-förmig ausgebildet. Vorzugsweise weist die Haltevorrichtung 960 ein Trägerelement 965 auf, dem die Halteelemente 961 und/oder 962 bzw. 963 zugeordnet sind.

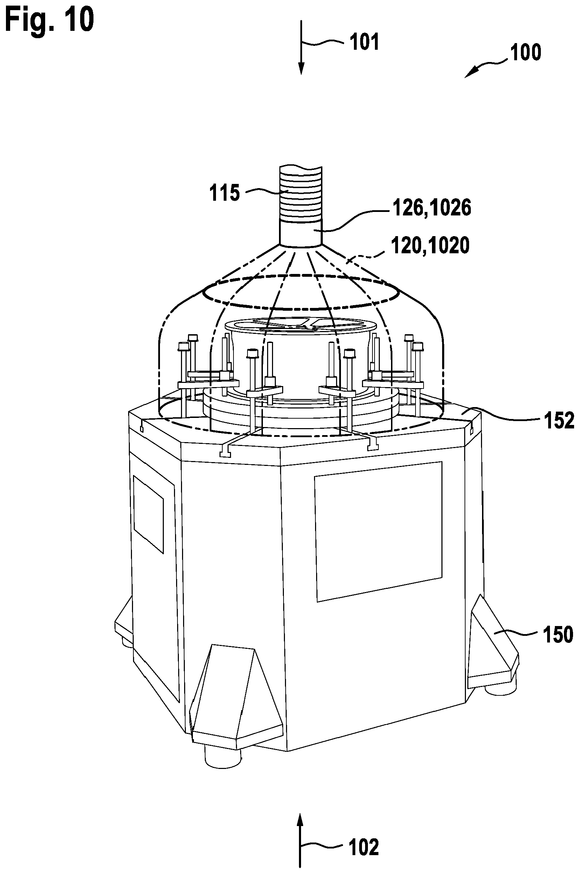

Fig. 10 zeigt die Biegeumlaufprüfmaschine 150 mit der Absaughülle 120 von Fig. 1, die gemäß einer weiteren Ausführungsform als steife Haube 1020 ausgebildet ist. Bevorzugt ist die als steife Haube 1020 ausgebildete Absaughülle 120 aus Kunststoff ausgebildet. Bevorzugt ist das zweite Ende 122 der Absaughülle 120 bzw. der steifen Haube 1020 auf dem Auflagetisch 152 angeordnet.

Analog zur Absaughülle 120, die als flexible Folie 820 ausgebildet ist, weist die steife Haube 1020 bevorzugt einen Absaugstutzen 1026 auf. Bevorzugt ist der Absaugstutzen 1026 einstückig mit der steifen Haube 1020 ausgebildet. Jedoch kann der Absaugstutzen auch als Adapter ausgebildet sein.

Es wird darauf hingewiesen, dass die Absaughülle 120, die illustrativ als steife Haube 1020 ausgebildet ist, mit der Absaugeinheit 130 von Fig. 8 und/oder von Fig. 9 verbunden sein kann. Allgemein wird darauf hingewiesen, dass die Absaugeinheit 130 nach Art eines Saugers 930 und/oder einer Zentralabsaugung 132 ausgebildet sein kann. Es können auch mehrere Absaugeinheiten 130 vorhanden sein. Dabei können auch mehrere Absaugeinheiten 130 miteinander kombiniert sein. Darüber hinaus kann das Filtersystem 135 einen Hepafilter 136 und/oder einen Wasserbadfilter 936 aufweisen. Auch hierbei können mehrere Filtersysteme 135 vorhanden sein. Dabei können mehrere Filtersysteme auch miteinander kombiniert sein und z.B. in Reihe geschaltet sein.

## Patentansprüche

1. Biegeumlaufprüfmaschine (150) zur Prüfung von Fahrzeugrädern, mit einem Auflagetisch (152) und einer Spannvorrichtung (210) zum Spannen eines zu prüfenden Fahrzeugrades (230) auf dem Auflagetisch (152), sowie mit einer Steuereinheit (890) zum Steuern einer bei einer Prüfung jeweils anzuwendenden Prüfkraft, **gekennzeichnet durch** eine Absaugvorrichtung (100) mit einer Absaughülle (120) und ein zugeordnetes Filtersystem (135), wobei die Absaugvorrichtung (100) eine Lufthüllkurve (530) um ein auf dem Auflagetisch (152) gespanntes Fahrzeugrad (230) zum Abtransport von bei der Biegeumlaufprüfung entstehenden Feinstäuben erzeugt, und wobei die Feinstäube durch die Lufthüllkurve (530) über die Absaughülle (120) an das zugeordnete Filtersystem (135) geleitet werden.

2. Biegeumlaufprüfmaschine nach Anspruch 1, **dadurch gekennzeichnet, dass** die Absaughülle (120) nach Art einer flexiblen Folie (820) oder einer steifen Haube (1020) ausgebildet ist.

3. Biegeumlaufprüfmaschine nach Anspruch 2, **dadurch gekennzeichnet, dass** die als flexible Folie (820) ausgebildete Absaughülle (120) mit Magneten (851-855) versehen ist, die eine Fixierung der Absaughülle (120) an der Biegeumlaufprüfmaschine (150) ermöglichen.

4. Biegeumlaufprüfmaschine nach Anspruch 2 oder 3, **dadurch gekennzeichnet, dass** die als flexible Folie (820) ausgebildete Absaughülle (120) als Reifrockkonstruktion (830) ausgebildet ist.

5. Biegeumlaufprüfmaschine nach einem der vorhergehenden Ansprüche, die zur Biegeumlaufprüfung von Karbon aufweisenden Fahrzeugrädern ausgebildet ist, wobei die Feinstäube Karbon-Feinstäube und/oder Karbon-Partikel aufweisen, die durch eine Beschädigung und/oder Zerstörung eines auf dem Auflagetisch (152) gespannten, Karbon aufweisenden Fahrzeugrades (230) bei einer Biegeumlaufprüfung freigesetzt werden.

6. Biegeumlaufprüfmaschine nach einem der vorhergehenden Ansprüche, **dadurch gekennzeichnet, dass** eine Absaugeinheit (130) zur Ausbildung der Lufthüllkurve (530) vorgesehen ist.

7. Biegeumlaufprüfmaschine nach Anspruch 6, **dadurch gekennzeichnet, dass** die Absaugeinheit (130) an der Biegeumlaufprüfmaschine (150) angeordnet ist oder in diese integriert ist.

8. Biegeumlaufprüfmaschine nach Anspruch 6 oder 7, **dadurch gekennzeichnet, dass** die Absaugeinheit (130) nach Art eines Saugers (930) und/oder einer Zentralabsaugung (132) ausgebildet ist.

9. Biegeumlaufprüfmaschine nach einem der vorhergehenden Ansprüche, **dadurch gekennzeichnet, dass** das Filtersystem (135) zum Filtern von gesundheitsschädlichen Feinstäuben ausgebildet ist, wobei das Filtersystem (135) einen Hepafilter (136) und/oder einen Wasserbadfilter (936) aufweist.

10. Biegeumlaufprüfmaschine nach einem der vorhergehenden Ansprüche, **dadurch gekennzeichnet, dass** ein Absaugelement (240) mit Absaugöffnungen (311-313;411-413) zum Abtransport der Feinstäube vorgesehen ist, wobei das Absaugelement (240) im Bereich einer Radnabe (235) eines auf dem Auflagetisch (152) gespannten Fahrzeugrades (230) ohne Kontakt zum Fahrzeugrad (230) angeordnet ist.

11. Absaugvorrichtung (100) für eine Biegeumlaufprüfmaschine (150) zur Prüfung von Fahrzeugrädern, wobei die Biegeumlaufprüfmaschine (150) einen Auflagetisch (152) und eine Spannvorrichtung (210) zum Spannen eines zu prüfenden Fahrzeugrades (230) auf dem Auflagetisch (152), sowie eine Steuereinheit (890) zum Steuern einer bei einer Prüfung jeweils anzuwendenden Prüfkraft aufweist, **gekennzeichnet durch** eine Absaughülle (120) und ein zugeordnetes Filtersystem (135), wobei die Absaugvorrichtung (100) eine Lufthüllkurve (530) um ein auf dem Auflagetisch (152) gespanntes Fahrzeugrad (230) zum Abtransport von bei der Biegeumlaufprüfung entstehenden Feinstäuben erzeugt, und wobei die Feinstäube durch die Lufthüllkurve (530) über die Absaughülle (120) an das zugeordnete Filtersystem (135) geleitet werden.
